# EUROPÄISCHE PATENTSCHRIFT

(11) **EP 1 143 759 B1**
(45) Veröffentlichungstag und Bekanntmachung des Hinweises auf die Patenterteilung: **22.11.2006**
(21) Anmeldenummer: 01440078.2
(22) Anmeldetag: 19.03.2001
(51) Int. Cl.: H04Q 7/38

(54) **Funkkommunikationssystem und Komponenten für ein Funkübertragungsverfahren nach verschiedenen Funkübertragungsmodi**
Radio communication system and components for communication in different radio modes
Système de radiocommunication et éléments pour la transmission par radio en modes différents

(30) Priorität: 05.04.2000 DE 10016889
(43) Veröffentlichungstag der Anmeldung: 10.10.2001
(73) Patentinhaber: ALCATEL, 75008 Paris (FR); Alcatel SEL Aktiengesellschaft, 70435 Stuttgart (DE)
(72) Erfinder: Wilhelm, Michael, 71665 Vaihingen/Enz-3 (DE)
(74) Vertreter: Brose, Gerhard

(56) Entgegenhaltungen:
- WO-A-98/51103
- US-A- 5 301 359
- US-A- 5 412 375
- US-A- 5 590 397

## Beschreibung

Die Erfindung betrifft ein Funkkommunikationssystem nach dem Oberbegriff des Anspruchs 1, eine Funkfeststation dafür sowie ein damit verbundenes Steuerungsmittel, ein drahtloses Teilnehmerendgerät dafür und ein Funkübertragungsverfahren nach einem der nebengeordneten Ansprüche.

Aus US 5,590,397 ist ein drahtloses Teilnehmerendgerät mit einem Sendeempfangsmittel bekannt, das nach verschiedenen Funkübertragungsmodi Funksignale an Funkfeststationen sendet und von diesen empfängt. Ein erster Teil der Funkfeststationen bildet ein erstes System, das nach einem ersten Funkübertragungsmodus arbeitet, insbesondere nach einem Mobilfunkstandard für öffentlichen Zellularfunk. Ein zweiter Teil der Funkfeststationen bildet ein zweites System, das nach einem zweiten, anderen Funkübertragungsmodus arbeitet, insbesondere nach einem Funkstandard für private schnurlose Telekommunikation. Jedes System hat einen Rundrufkanal über den eine Systemkennung (system identification code) ausgestrahlt. Die Rundrufkanäle müssen von dem Teilnehmerendgerät abgetastet werden. In dem drahtlosen Teilnehmerendgerät ist eine Prioritätsliste gespeichert, in der in einer bevorzugten Reihenfolge die Systemkennungen der Systeme aufgelistet sind. Und das Teilnehmergerät wählt aus den empfangenen Systemkennungen anhand der Prioritätsliste die beste Systemkennung aus. Es wählt damit also den für das Teilnehmerendgerät besten Funkübertragungsmodus aus. Demnach ist aus US 5,590,397 ein Funkkommunikationssystem bekannt mit mindestens einer Funkfeststation und mit mindestens einem drahtlosen Teilnehmerendgerät, das ein Sendeempfangsmittel enthält, um Funksignale nach mindestens zwei verschiedenen Funkübertragungsmodi zu senden und zu empfangen, und das ein Auswahlmittel enthält, um zumindest vor dem Aufbau einer Teilnehmerverbindung mit einer der mindestens einen Funkfeststation einen der verschiedenen Funkübertragungsmodi auszuwählen. Jedoch haben das bekannte Funkkommunikationssystem und Funkübertragungsverfahren den Nachteil, das ein Engpass in der Funkversorgung auftreten kann, wenn sehr viele Teilnehmerendgeräte ähnliche Prioritätslisten haben und dadurch gleichzeitig denselben Funkübertragungsmodus für den Aufbau von Teilnehmerverbindungen wählen. Damit würde zum überwiegenden Teil nur eines der beiden Systeme belastet. Außerdem müssen die Diensteanbieter (provider), die über die verschiedenen Systeme ihre Funkdienste anbieten, die verschiedenen Systemkennungen kennen und in den Teilnehmerprofilen abspeichern.

WO98/51103 beschreibt ein Funkkommunikationssystem das eine Basisstation beinhaltet die in der Lage ist mit verschiedene Funkübertragungsmodi zu arbeiten. Die Basisstation sendet zu den mobilen Teilnehmer eine Rundspruchnachricht die beinhaltet die verschieden Frequenzen und Kommunikationsprotokollen die von der Basisstation unterstützt werden. Anhand von dieser Information selektiert der mobile Teilnehmer ein Funkübertragungsmodus um mit der Basisstation zu kommunizieren.

US patent Nr. 5,412,375 beschreibt ein Kommunikationssystem mit mehrere Luftschnittstellen. Sowohl die mobilen Enduser als auch die Basisstationen beinhalten eine Listen von verfügbaren Luftschnittstellen. Eine Verbindung kommt zustande in dem ein Kontroller auf der Netzseite die verfügbaren Luftschnittstellen der zwei Kommunikationspartner vergleicht, eine gemeinsame Luftschnittstelle auswählt und den zwei Kommunikationspartner den Auswahl mitteilt.

Aufgabe der Erfindung ist es, ein Funkkommunikationssystem und ein Funkübertragungsverfahren zu schaffen, bei dem eine ausreichende Funkversorgung permanent sichergestellt ist, ohne dass die oben genannten Nachteile auftreten. Außerdem sollen eine Funkfeststation dafür sowie ein damit verbundenes Steuerungsmittel und ein drahtloses Teilnehmerendgerät bereitgestellt werden.

Gelöst wird die Aufgabe durch ein Funkkommunikationssystem mit den Merkmalen des Anspruch 1 sowie durch ein Funkübertragungsverfahren, durch eine Funkfeststation, durch ein damit verbundenes Steuerungsmittel, und durch ein drahtloses Teilnehmerendgerät mit den Merkmalen nach einem der nebengeordneten Ansprüche.

Demnach wird ein Funkkommunikationssystem vorgeschlagen, bei dem die mindestens eine Funkfeststation auch ein Sendeempfangsmittel enthält um nach verschiedenen Funkübertragungsmodi zu senden und zu empfangen, und bei dem die mindestens eine Funkfeststation mit einem Steuerungsmittel verbunden ist, das anhand von vorgebbaren Kriterien für jeden der verschiedenen Funkübertragungsmodi einen Verfügbarkeitswert bestimmt und die Funkfeststation steuert, um an das drahtlose Teilnehmerendgerät eine Kennung zumindest für denjenigen Funkübertragungsmodus zu senden, der den höchsten Verfügbarkeitswert hat. Das erfindungsgemäße Funkübertragungsverfahren mit den entsprechenden Merkmalen zeichnet sich dadurch aus, dass von der Funkfeststation auch Funksignale nach verschiedenen Funkübertragungsmodi gesendet und empfangen werden, und dass von einem mit der Funkfeststation verbundenen Steuerungsmittel anhand von vorgebbaren Kriterien für jeden der verschiedenen Funkübertragungsmodi ein Verfügbarkeitswert bestimmt wird und die Funkfeststation gesteuert wird, um an das drahtlose Teilnehmerendgerät eine Kennung zumindest für denjenigen Funkübertragungsmodus zu senden, der den höchsten Verfügbarkeitswert hat.

Durch die erfindungsgemäßen Maßnahmen wird erreicht, dass von Seiten der Funkfeststation zumindest derjenige Funkübertragungsmodus dem Teilnehmerendgerät angeboten wird, der die beste momentane Verfügbarkeit im Versorgungsbereich dieser Funkfeststation hat. Darüber hinaus kann ein mit allen Funkfeststationen verbundenes Steuerungsmittel diese Funktion zentral ausführen. Die Erfindung hat den Vorteil, dass die Netzseite des Funkkommunikationssystems Einfluss auf die Wahl der Funkübertragungsmodi nimmt, wobei von dem Steuerungsmittel die Funkversorgung zentral gesteuert werden kann, um die Funkressourcen sehr effizient zu nutzen. Auch können die Funkfeststationen sukzessive mit Mitteln, insbesondere mit Software, für die Übertragung nach einem neuen Funkübertragungsmodus ausgestattet und erweitert werden. Damit ist die schrittweise Einführung neuer Technologie in das Funkkommunikationssystem möglich, ohne dass dazu das gesamte Funkkommunikationssystem abgeschaltet werden muss.

Besonders vorteilhafte Ausgestaltungen der Erfindung ergeben sich aus den Unteransprüchen.

Demnach ist es besonders vorteilhaft, wenn die vorgebbaren Kriterien die momentan im Funksystem vorhandenen Funkressourcen sind, und wenn das Steuerungsmittel durch Überwachung der Funkressourcen an jeder mit ihr verbundenen Funkfeststation demjenigen Funkübertragungsmodus, der momentan die meisten Funkressourcen aufweist, den höchsten Verfügbarkeitswert zuweist. Damit werden die Funkressourcen zentral verwaltet und optimal genutzt.

Auch ist es besonders vorteilhaft, wenn die verschiedenen Funkübertragungsmodi standardisierte Funkübertragungsverfahren, insbesondere verschiedene Versionen von standardisierten Funkübertragungsverfahren, umfassen, und wenn das Sendeempfangsmittel der mindestens einen Funkfeststation und des mindestens einen drahtlosen Teilnehmerendgerätes Funksignale gemäß diesen standardisierten Funkübertragungsverfahren, senden und empfangen können. Durch diese Maßnahmen wird die Erfindung für den Aufbau eines Multi-Standard Systems weitergebildet, das schrittweise um neue zukünftige Standards erweitert und damit sehr kostengünstig ausgebaut werden kann. Auch können verschiedene Versionen von Standards angeboten werden. Auch ist die frühzeitige Einführung eines neuen Standards sehr leicht möglich, in dem eine erste Testversion dieses neuen Standards, eine sogenannte Beta-Version angeboten wird.

Ein weiterer Vorteil ergibt sich, wenn das Steuerungsmittel für die Funkfeststation eine Prioritätsliste erstellt, in der die Kennungen für die Funkübertragungsmodi in einer von der Höhe ihrer Verfügbarkeitswerte abhängigen Rangfolge aufgelistet sind, wenn die Funkfeststation diese Prioritätsliste an das drahtlose Teilnehmerendgerät sendet, und wenn das drahtlose Teilnehmerendgerät die Prioritätsliste empfängt und mittels der dort aufgelisteten Kennungen der Funkübertragungsmodi prüft, ob zumindest eine der Kennungen einen Funkübertragungsmodus angibt, nach dem das Sendeempfangsmittel des Teilnehmerendgerätes Funksignale senden und empfangen kann. Dem Teilnehmerendgerät wird also eine Liste mit bevorzugt angebotenen Funkübertragungsmodi zur Auswahl gesendet. Dadurch wird die Wahrscheinlichkeit erhöht, dass das Teilnehmerendgerät einen der angebotenen Modi akzeptiert. Der Verbindungsaufbau wird dadurch deutlich beschleunigt. Es ist in diesem Zusammenhang für den Fall, dass zumindest zwei Kennungen Funkübertragungsmodi angeben, nach denen das Sendeempfangsmittel des Teilnehmerendgerätes Funksignale senden und empfangen kann, besonders vorteilhaft, wenn dann das drahtlose Teilnehmerendgerät denjenigen Funkübertragungsmodus wählt, der den höchsten Verfügbarkeitswert hat. Dadurch wird sichergestellt, dass der für beide Seiten (Teilnehmerseite und Netzseite) bestmögliche Funkübertragungsmodus gewählt wird.

Von besonderem Vorteil ist es auch , wenn zunächst das drahtlose Teilnehmerendgerät an die Funkfeststation die Kennungen für alle diejenigen Funkübertragungsmodi sendet, nach denen das Sendeempfangsmittel des Teilnehmerendgerätes Funksignale senden und empfangen kann, und wenn dann das Steuerungsmittel für die Funkfeststation die Prioritätsliste mittels der von dem Teilnehmerendgerät gesendeten Kennungen erstellt, wobei in der Prioritätsliste nur diese Kennungen in einer von der Höhe ihrer Verfügbarkeitswerte abhängigen Rangfolge aufgelistet sind. Die Prioritätsliste enthält also nur noch die Kennungen für solche Funkübertragungsmodi, die das Teilnehmerendgerät verwenden kann. Durch diese Maßnahmen wird die Erstellung der Prioritätsliste deutlich beschleunigt. In diesem Zusammenhang ist es besonders vorteilhaft, wenn das drahtlose Teilnehmerendgerät die Kennungen für die Funkübertragungsmodi gemäß einer vorgebbaren Rangfolge zu einer Wunschliste zusammenstellt und diese Wunschliste an die Funkfeststation sendet, und wenn dann das Steuerungsmittel für die Funkfeststation die Prioritätsliste mittels der gesendeten Wunschliste erstellt, wobei in der Prioritätsliste die Kennungen mit gleich hohen Verfügbarkeitswerten aufgelistet sind entsprechend der vom Teilnehmerendgerät gewünschten Rangfolge.

Außerdem ist es in diesem Zusammenhang besonders vorteilhaft, wenn das drahtlose Teilnehmerendgerät Eingabemittel enthält, mittels denen der Teilnehmer die Rangfolge der in der Wunschliste aufgelisteten Funkübertragungsmodi vorgibt, oder wenn das drahtlose Teilnehmerendgerät Auswertemittel enthält, die mittels des von dem Teilnehmer gewünschten Telekommunikationsdienstes die Rangfolge der in der Wunschliste aufgelisteten Funkübertragungsmodi vorgeben. Die Wunschliste kann demnach entweder manuell oder automatisch erstellt werden.

Die Erfindung und die sich daraus ergebenden Vorteile werden im weiteren anhand von Ausführungsbeispielen und unter Bezugnahme auf folgende Zeichnungen näher beschrieben:
Fig. 1 zeigt schematisch den Aufbau eines Funkkommunikationssystems;
Fig. 2a zeigt das Ablaufdiagramm für ein Funkübertragungsverfahren; und
Fig. 2b zeigt eine Variante zum Ablaufdiagramm nach der Fig. 2a.

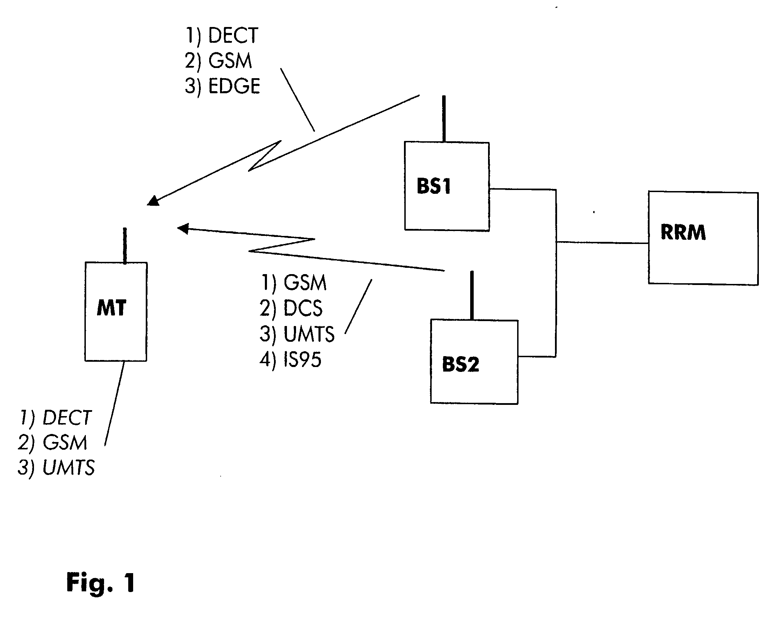

In der Figur 1 ist schematisch der Aufbau eines erfindungsgemäßen Funkkommunikationssystems gezeigt. Das System enthält mehrere Funkfeststationen, von denen beispielhaft zwei Funkfeststationen BS1 und BS2 dargestellt sind. Die beiden Funkfeststationen sind mit einem Steuerungsmittel RRM verbunden, dass die Funkressourcen im Funksystem überwacht und die Funkfeststationen steuert. Zu den Funktionen des Steuerungsmittels RRM gehören unter anderem die Überwachung und Zuteilung der verschiedenen Funkkanäle und die noch später näher beschriebenen Zuweisung der verschiedenen Funkübertragungsmodi sowie die dazugehörige Erstellung von Prioritätslisten.

Jede der Funkfeststationen BS1 und BS2 versorgt eine Funkzelle in der sich drahtlose Teilnehmerendgeräte befinden. Die Teilnehmerendgeräte stehen in Funkverbindung mit mindestens einer der Funkfeststationen und können vor Ort fest installiert sein oder sich durch die Funkzellen des Systems bewegen. In der Figur 1 ist beispielhaft für viele nur ein einziges drahtloses Teilnehmerendgerät MT dargestellt.

Das Teilnehmerendgerät MT enthält ein nicht dargestelltes Sendeempfangsmittel, das Funksignale nach mehreren Funkübertragungsmodi, hier beispielsweise nach den drei Modi DECT, GSM oder UMTS, senden und empfangen kann. Außerdem enthält das Teilnehmerendgerät ein nicht dargestelltes Auswahlmittel, das vorzugsweise vor dem Aufbau einer Teilnehmerverbindung einen der verschiedenen Funkübertragungsmodi DECT, GSM oder UMTS auswählt.

Die Funkfeststationen BS1 und BS2 enthalten nun auch nicht dargestellte Sendeempfangsmittel, die ebenfalls nach verschiedenen Funkübertragungsmodi senden und empfangen können. Die erste Funkfeststation BS1 kann entsprechend den drei Funkübertragungsmodi DECT, GSM oder EDGE Funksignale senden oder empfangen. Die zweite Funkfeststation BS2 ist sogar in der Lage Funksignale nach vier verschiedenen Funkübertragungsmodi GSM, DCS, UMTS oder IS95 zu senden und zu empfangen. Die Übertragungsmodi DECT, GSM, DCS UMTS oder IS95 betreffen jeweils verschiedene Funkübertragungsstandards, die unter diesen Bezeichnungen bekannt sind.

Der Funkübertragungsmodus EDGE ist ein für die drahtlose Datenübertragung optimierter Funkübertragungsmodus, der im Rahmen von GSM standardisiert ist und diese Bezeichnung trägt.

Wie das Beispiel nach Figur 1 zeigt, ist das drahtlose Teilnehmerendgerät MT in der Lage mit der ersten Funkfeststation BS1 entsprechend dem Funkübertragungsmodus DECT oder GSM Funksignale auszutauschen. In Bezug auf die zweite Funkstation BS2 kann das drahtlose Teilnehmerendgerät MT nach den Übertragungsmodi GSM oder UMTS Funksignale austauschen. Das bedeutet, dass das drahtlose Teilnehmerendgerät für den Fall, dass es den Modus GSM benutzt, sich von einer Funkzelle zur anderen bewegen kann, ohne dass der Modus gewechselt werden muss. Jedoch könnte es sinnvoll sein, den Funkübertragungsmodus zu wechseln, wenn beispielsweise die erste Funkfeststation BS1 die Funkversorgung im häuslichen Bereich des Teilnehmers bereitstellt und die zweite Funkfeststation BS2 einen öffentlichen Bereich versorgt. In diesem Falle könnte der Teilnehmer im Versorgungsbereich der ersten Funkfeststation BS1 den Modus DECT und im Versorgungsbereich der zweiten Funkfeststation BS2 den Modus GSM bevorzugen. Denn die Verwendung der DECT-Funkübertragung bedeutet im Vergleich mit der GSM-Funkübertragung einen günstigeren Tarif, so dass der Teilnehmer den DECT- Modus bevorzugt. Dieses Kriterium ist nur eines von vielen teilnehmerseitigen Kriterien, die für die Wahl des Modus herangezogen werden können, und die entweder der Teilnehmer selbst vorgeben kann oder die bereits im Teilnehmerendgerät gespeichert sein können.

Nach der hier vorgeschlagenen Erfindung werden auch netzseitige Kriterien ausgewertet, um die Verfügbarkeit der verschiedenen Funkübertragungsmodi zu bestimmen. Von den Funkfeststationen BS1 und BS2 werden dann die verschiedenen Funkübertragungsmodi entsprechend ihrer momentanen Verfügbarkeit dem Teilnehmerendgerät MT angeboten. Die vorgebbaren Kriterien werden dabei von dem Steuerungsmittel RRM auswertet, um den verschiedenen Funkübertragungsmodi jeweils einen Verfügbarkeitswert zuzuordnen. Zumindest derjenige Funkübertragungsmodus, der den höchsten Verfügbarkeitswert hat, wird dem drahtlosen Teilnehmerendgerät MT angeboten. Vorzugsweise wird jedoch eine nach Prioritäten geordnete Liste von dem Steuerungsmittel RRM erstellt und an das drahtlose Teilnehmerendgerät gesendet. Damit stehen dem Teilnehmerendgerät MT in der Regel mehrere Funkübertragungsmodi zur Auswahl. Am Beispiel der Figur 1 ist dargestellt, dass die erste Funkfeststation BS1 die Modi DECT, GSM und EGDE anbietet. Die zweite Funkfeststation BS2 bietet die Modi GSM, DCS, UMTS und IS95 an.

Die Kriterien, die das Steuerungsmittel RRM heranzieht, um die verschiedenen Funkübertragungsmodi anzubieten, können sowohl vom Funknetzbetreiber als auch vom Teilnehmer vorgegeben werden. Denkbar sind Kriterien wie etwa die gewünschten Telekommunikationsdienste des Teilnehmers, die für die Übertragungsmodi vereinbarten Nutzungstarife (Gebühren), die momentane Auslastung der Funkressourcen (Belegung der einzelnen Funkkanäle innerhalb der Übertragungsmodi). Auch andere Kriterien, wie beispielsweise der Standort der jeweiligen Funkfeststation (privater oder öffentlicher Bereich), die Störresistenz der verschiedenen Übertragungsmodi gegen momentan auftretende Störungen, sowie allgemeine Netzplanungsaspekte, können für die Erstellung einer Prioritätsliste herangezogen werden.

Das Senden der Prioritätslisten erfolgt vor dem Aufbau einer Teilnehmerverbindung über einen Rundspruchkanal, der für alle Funkübertragungsmodi einheitlich ist. Es ist auch denkbar, dass für jeden Modus ein separater Rundspruchkanal genutzt wird, insbesondere dann, wenn verschiedene Funkübertragungsstandards angeboten werden. In diesem Fall wird auf jedem der Rundspruchkanäle die vollständige Prioritätsliste gesendet, so dass das Teilnehmerendgerät nur einen Rundspruchkanal abhören muss.

Das Steuerungsmittel kann nicht nur zentral, etwa in eine Funknetzsteuerung (radio network controller) oder in eine Mobilfunkvermittlungsstelle (mobile switching center) integriert sein. Es ist auch denkbar, dass in jede Funkfeststation ein Steuerungsmittel integriert ist.

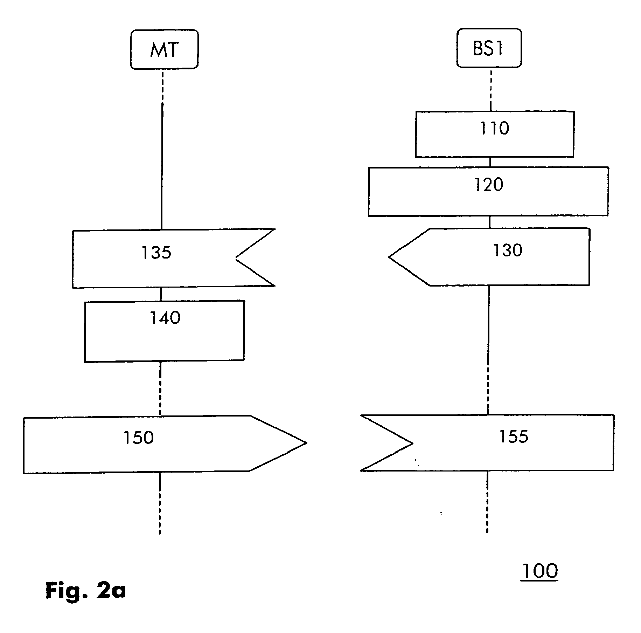

Es folgt anhand der Figur 2a die Beschreibung eines erfindungsgemäßen Funkübertragungsverfahrens, wobei auch auf das in Figur 1 dargestellte Funkkommunikationssystem Bezug genommen wird.

Die Figur 2a zeigt das Ablaufdiagramm eines ersten Verfahrens 100 zum Aufbau einer Teilnehmerverbindung zwischen dem drahtlosen Teilnehmerendgerät MT und der Funkfeststation BS1. In einem ersten Schritt 110 werden zunächst die verfügbaren Funkressourcen ermittelt. Diese Funktion wird von dem mit der Funkfeststation verbundenen Steuerungsmittel ausgeführt. Das Steuerungsmittel kann auch in die Funkfeststation integriert sein. Im einzelnen wird geprüft, welche der möglichen Funkübertragungsmodi, hier etwa DECT, GSM oder EDGE, momentan zur Verfügung stehen. Dabei spielen die Anzahl der freien Funkkanäle, das Signal-Rauschverhältnis (S/N), das Träger-zu-Interferenz-Verhältnis (CIR) oder auch andere Kriterien eine Rolle. Dann wird in einem nächsten Schritt 120 eine Prioritätsliste erstellt, in der momentan verfügbare Funkübertragungsmodi aufgelistet sind. Dazu wird zunächst jedem Funkübertragungsmodus ein Verfügbarkeitswert zugeordnet, der umso höher ist, je besser die Verfügbarkeit dieses Modus ist. In diesem Beispiel sind deutlich mehr DECT-Funkkanäle frei als GSM- oder EDGE-Funkkanäle. Daher erhält der Funkübertragungsmodus DECT den höchsten Verfügbarkeitswert und wird an die erste Stelle innerhalb der Prioritätsliste eingetragen. Die anderen Funkübertragungsmodi GSM und EDGE haben geringere Verfügbarkeitswerte und werden auf Platz 2 bzw. auf Platz 3 in die Liste eingetragen. Diese derart zusammengestellte Prioritätsliste gibt an, welche der drei Funkübertragungsmodi bevorzugt zum Aufbau der Funkübertragung verwendet werden sollen. In einem nächsten Schritt 130 wird dann diese Prioritätsliste über den Rundspruchkanal (broadcast channel) an das drahtlose Teilnehmerendgerät MT übertragen.

Das Teilnehmerendgerät MT, das in einem nächsten Schritt 135 diese Prioritätsliste empfängt, kann aus den ihr angebotenen Funkübertragungsmodi DECT, GSM oder EDGE einen Modus auswählen, wobei die Rangfolge innerhalb der Prioritätsliste anzeigt, welche Funkübertragungsmodi bevorzugt genommen werden sollten. In einem nächsten Schritt 140 prüft nun das Teilnehmerendgerät MT welche in der Prioritätsliste eingetragenen Modi überhaupt das Sendeempfangsmittel des Teilnehmerendgerätes verwenden kann. In diesem Beispiel ist das Sendeempfangsmittel des Teilnehmerendgerätes MT grundsätzlich in der Lage Funksignale nach den Modi DECT, GSM oder UMTS zu senden und zu empfangen. Das Teilnehmerendgerät MT stellt nun in dem Schritt 140 fest, dass lediglich die beiden Modi DECT und GSM für eine Auswahl zum Aufbau einer Teilnehmerverbindung mit der Basisstation BS1 in Frage kommen können. Denn der Modus UMTS wird von der Basisstation BS 1 nicht angeboten. Im einfachsten Fall akzeptiert nun das Teilnehmerendgerät MT die in der Prioritätsliste vorgegebene Reihenfolge und wählt demnach den bevorzugten Modus DECT aus. Anschließend wird in einem nächsten Schritt 150 der Aufbau einer DECT-Teilnehmerverbindung angefordert. Die Funkfeststation BS1 empfängt in einem Schritt 155 dann diese Anforderung. Der Aufbau der Teilnehmerverbindung erfolgt anschließend nach den allseits bekannten und hier nicht näher beschriebenen Schritten.

Der Schritt 140 kann auch dahingehend erweitert werden, dass das Teilnehmerendgerät MT aus der empfangenen Prioritätsliste einen Funkübertragungsmodus auswählt, wobei auch im Teilnehmerendgerät MT vorgegebene Kriterien berücksichtigt werden. Beispielsweise bevorzugt der Teilnehmer die Benutzung des Funkübertragungsmodus GSM, so dass das Teilnehmerendgerät MT in diesem Beispiel auch den Modus GSM auswählt, obwohl dieser Modus erst an zweiter Stelle in der Prioritätsliste erscheint. Es könnte auch der Fall vorliegen, dass das Teilnehmerendgerät MT aus der Funkzelle der zweiten Funkfeststation BS2 kommend und den Modus GSM benutzend in die Funkzelle der ersten Funkfeststation BS1 eintritt und den Modus GSM beibehalten möchte. Das Beispiel zeigt, dass das erfindungsgemäße Funkübertragungsverfahren nicht nur zum erstmaligen Aufbau einer Teilnehmerverbindung sondern auch zum Durchführen eines Weiterreichens (Handover) ausgeführt werden kann. Im einfachsten Fall nur der am besten verfügbare Funkübertragungsmodus dem Teilnehmerendgerät angeboten, indem die Funkfeststation eine Kennung für diesen Funkübertragungsmodus an das Teilnehmerendgerät sendet. Vorzugsweise wird jedoch eine Prioritätsliste erstellt und zur Auswahl an das Teilnehmerendgerät MT gesendet. Die Berücksichtigung der momentan verfügbaren Funkressourcen bei der Vorgabe des mindestens einen Funkübertragungsmodus führt dazu, dass die Übertragungskapazität im gesamten Funkkommunikationssystem deutlich erhöht wird.

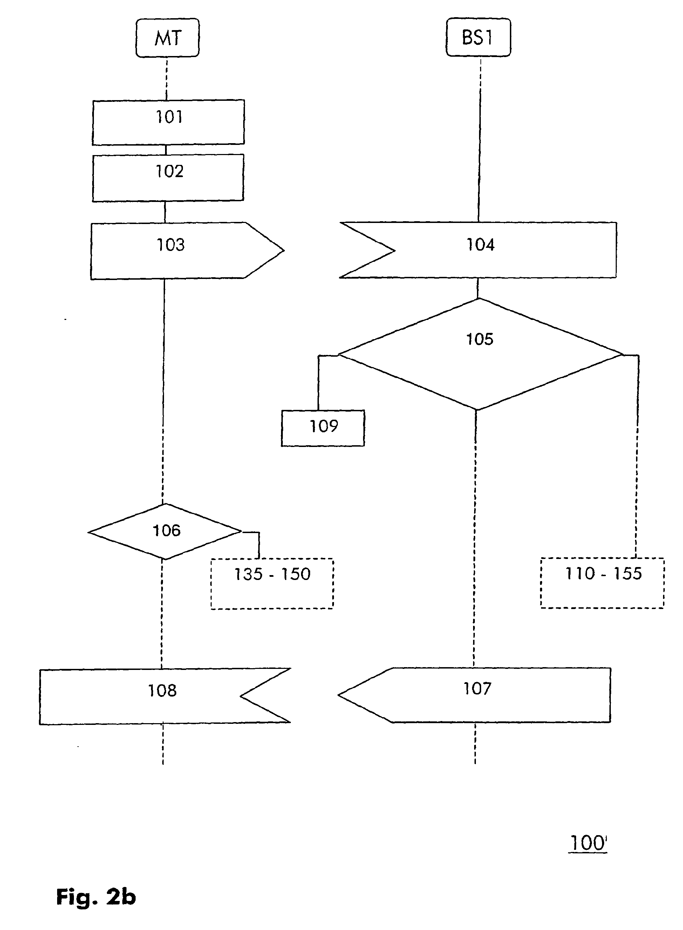

In der Figur 2b ist nun eine Variante zu dem zuvor beschriebenen Verfahren dargestellt. Bei der nun folgenden Beschreibung dieser Variante wird auch auf die Figur 1 Bezug genommen.

Die Figur 2b zeigt das Ablaufdiagramm für ein Verfahren 100', bei dem zunächst von Seiten des Teilnehmerendgerätes MT Kennungen für die gewünschten Funkübertragungsmodi an die Funkfeststation BS1 gesendet werden.

Im einfachsten Fall sendet das Teilnehmerendgerät MT lediglich eine Kennung für den von ihm bevorzugten Modus an die Funkfeststation BS1. Dabei spielen die Auswertung von Kriterien, wie beispielsweise der gewünschten Telekommunikationsdienste, der geforderten Datenrate, des momentanen Aufenthaltsorts (Indoor oder Outdoor) oder auch des bevorzugten Tarifmodells eine Rolle.

In diesem Beispiel wird in einem ersten Schritt 101 zunächst geprüft, welcher Telekommunikationsdienst gewünscht wird. Mögliche Dienste sind etwa Sprachdienste, Datendienste, Kurzmitteilungen, Faxdienste, E-Mail oder Internetdienste nachdem sogenannten WAP-Protokoll. In diesem Beispiel möge der Teilnehmer lediglich ein Telefonat führen wollen, d.h. er möchte einen Sprachdienst in Anspruch nehmen. Dies tut er etwa durch Betätigung der Tastatur, die als Eingabemittel des Teilnehmerendgerätes MT dient. Auch eine Spracheingabe mittels Spracherkennung ist denkbar. In einem nächsten Schritt 102 wird dann vom Teilnehmerendgerät anhand der Eingabe des gewünschten Dienstes der in Frage kommende und dazu passende Funkübertragungsmodus bestimmt. In einem nachfolgenden Schritt 103 wird dann die Kennung dieses Modus an die Funkfeststation BS1 gesendet, d.h. es wird signalisiert, welchen Modus das Teilnehmerendgerät MT wünscht und bevorzugt. Hier wird beispielsweise der Modus DECT bestimmt und signalisiert.

Die Funkfeststation BS1 empfängt in einem Schritt 104 die Kennung für diesen bevorzugten Modus DECT und prüft in einem nachfolgenden Schritt 105, ob dieser Modus von der Funkfeststation BS1 unterstützt werden kann. Kann die Funkfeststation BS1 diesen Modus DECT nicht unterstützen, so wird auf einen Schritt 109 verzweigt, in dem eine Fehlerbehandlungsroutine abgearbeitet wird. Kann jedoch der Modus von der Funkfeststation BS1 unterstützt werden, so wird zum nächsten Schritt 107 der Aufbau einer entsprechenden Teilnehmerverbindung eingeleitet. Diesem Beispiel nach soll also eine DECT-Teilnehmerverbindung aufgebaut werden.

Auf die ebenfalls in Figur 2b gezeigte Abzweigung zu den Schritten 110 bis 155 wird später noch genau eingegangen. In einem nächsten Schritt 108 empfängt nun das Teilnehmerendgerät MT dieses Signal zum Aufbau einer DECT-Teilnehmerverbindung. Danach folgen übliche und hier nicht näher beschriebene Schritte zum Aufbau dieser Teilnehmerverbindung.

Auf der Seite des Teilnehmerendgerätes geht dem Schritt 108 ein Schritt 106 voraus, in dem das Teilnehmerendgerät MT prüft, ob es lediglich einen Funkübertragungsmodus, wie hier z.B. DECT oder mehrere Funkübertragungsmodi wünscht. Wird nur ein Funkübertragungsmodus gewünscht, so wird der Schritt 108 durchgeführt. Werden jedoch mehrere Funkübertragungsmodi gewünscht, so werden die noch später beschriebenen Schritte 135 bis 150 durchgeführt.

Bei der obigen Beschreibung der Figur 2 b wurde bis jetzt davon ausgegangen, dass das Teilnehmerendgerät MT lediglich einen Funkübertragungsmodus wünscht und dieses im Schritt 103 an die Funkfeststation BS1 signalisiert. Es ist jedoch auch denkbar, dass das Teilnehmerendgerät an die Funkfeststation eine Wunschliste mit mehreren Funkübertragungsmodi sendet. Diese Wunschliste kann etwa alle diejenigen Funkübertragungsmodi enthalten, die vom Sendeempfangsmittel des Teilnehmerendgerätes verwendet werden können. Entsprechend dem in der Figur 1 dargestellten drahtlosen Teilnehmerendgerät MT wären dies die drei Funkübertragungsmodi DECT, GSM oder UMTS. Demnach ist es denkbar, dass im Schritt 104 die Funkfeststation BS1 von dem Teilnehmerendgerät MT eine Wunschliste empfängt, in der mehrere Modi, nämlich DECT, GSM und UMTS, eingetragen sind. Sollte dies der Fall sein, so wird in dem Schritt 105 dies festgestellt und dann zu den Schritten 110 bis 155 verzweigt, d.h. zu den bereits anhand der Figur 2a beschriebenen Verfahrensschritten. Ebenso verzweigt die im Teilnehmerendgerät MT durchgeführte Prozedur im Schritt 106 zu den entsprechenden Schritten 135 bis 150. Das bedeutet dass zunächst die Fünkfeststation anhand der empfangenen Wunschliste eine Vorauswahl für die von dem Steuerungsmittel zu erstellenden Prioritätsliste trifft. Danach wird dann eine Prioritätsliste erstellt, in der lediglich solche Funkübertragungsmodi auftreten können, die das Teilnehmerendgerät signalisiert hat und die es auch verwenden kann. Dazu wird in den Schritten 110 bis 155 einschließlich den Schritten 135 bis 150 das schon anhand der Figur 2a beschriebene Teilverfahren durchgeführt, wonach letztendlich das Teilnehmerendgerät MT einen Modus aus der erstellten Prioritätsliste auswählt.

Die anhand der Figuren 2a und 2b beschriebenen Verfahren so wie das anhand der Figur 1 beschriebene Funkkommunikationssystem sind vorzugsweise so ausgestaltet, dass Funkübertragungen nach verschiedenen Funkübertragungsstandards erfolgen können, d.h. dass eine multistandardkonforme Funkkommunikation erfolgen kann. Dabei sind sowohl das Teilnehmerendgerät als auch die Funkfeststationen in der Lage nach verschiedenen Mobilfunkstandards zu arbeiten. Es ist auch möglich, das Funksignale nach verschiedenen Versionen eines Standards übertragen werden. Dadurch kann beispielsweise ein neuer Standard bereits sehr früh in Form einer Testversion (Beta-Version) in das Funkkommunikationssystem eingeführt werden. Die vorgeschlagenen Übertragung von Kennungen für besonders bevorzugte Funkübertragungsmodi, insbesondere Funkübertragungsstandards, ermöglicht eine optimale Nutzung der vorhandenen Funkressourcen.

## Patentansprüche

1. Funkkommunikationssystem mit mindestens einer Funkfeststation (BS1, BS2) und mit mindestens einem drahtlosen Teilnehmerendgerät (MT), das ein Sendeempfangsmittel enthält, um Funksignale nach mindestens zwei verschiedenen Funkübertragungsmodi (DECT, GSM, UMTS, IS95) zu senden und zu empfangen, und das ein Auswahlmittel enthält, um zumindest vor dem Aufbau einer Teilnehmerverbindung mit einer (BS1) der mindestens einen Funkfeststation (BS1, BS2) einen der verschiedenen Funkübertragungsmodi (DECT, GSM, UMTS) auszuwählen,
bei dem
die mindestens eine Funkfeststation (BS1) auch ein Sendeempfangsmittel enthält, um nach verschiedenen Funkübertragungsmodi (DECT, GSM, EDGE) zu senden und zu empfangen,
***dadurch gekennzeichnet, dass***
die mindestens eine Funkfeststation (BS1) mit einem Steuerungsmittel (RRM) verbunden ist, das anhand von vorgebbaren Kriterien für jeden der verschiedenen Funkübertragungsmodi (DECT, GSM, EDGE) einen Verfügbarkeitswert bestimmt und die Funkfeststation (BS1) steuert, um an das drahtlose Teilnehmerendgerät (MT) die Kennung für die *verfügbaren* Funkübertragungsmodi zu senden
*dass das Steuerungsmittel (RRM) für die*
*Funkfeststation (BS1) eine Prioritätsliste erstellt, in der die Kennungen für die Funkübertragungsmodi (DECT, GSM, EDGE) in einer von der Höhe ihrer Verfügbarkeitswerte abhängigen Rangfolge aufgelistet sind, dass die Funkfeststation (BS1) diese Prioritätsliste an das drahtlose Teilnehmerendgerät (MT) sendet, und dass das drahtlose Teilnehmerendgerät* (*MT*) *die Prioritätsliste empfängt und mittels der dort aufgelisteten Kennungen der Funkübertragungsmodi (DECT, GSM, EDGE) prüft, ob zumindest eine der Kennungen einen Funkübertragungsmodus (DECT) angibt, nach dem das Sendeempfangsmittel des Teilnehmerendgerätes (MT) Funksignale senden und empfangen kann*
und dass das drahtlose Teilnehmerendgerät (MT) den in der Prioritätsliste bevorzugten und vom drahtlosen Teilnehmerendgerät (MT) unterstützten Funkübertragungsmodus auswählt.

2. Funkkommunikationssystem nach Anspruch 1,
**dadurch gekennzeichnet, dass** die vorgebbaren Kriterien die momentan im Funksystem vorhandenen Funkressourcen sind, und **dass** das Steuerungsmittel (RRM) durch Überwachung der an jeder mit ihr verbundenen Funkfeststation (BS1, BS2) vorhandenen Funkressourcen demjenigen Funkübertragungsmodus (DECT), der momentan die meisten Funkressourcen aufweist, den höchsten Verfügbarkeitswert zuweist.

3. Funkkommunikationssystem nach Anspruch 1,
**dadurch gekennzeichnet, dass** die verschiedenen Funkübertragungsmodi standardisierte Funkübertragungsverfahren (DECT, GSM, UMTS, IS95), insbesondere verschiedene Versionen von standardisierten Funkübertragungsverfahren, umfassen, und **dass** das Sendeempfangsmittel der mindestens einen Funkfeststation und des mindestens einen drahtlosen Teilnehmerendgerätes (MT) Funksignale gemäß diesen standardisierten Funkübertragungsverfahren (DECT, GSM, UMTS, IS95) senden und empfangen können.

4. Funkkommunikationssystem nach Anspruch 3,
**dadurch gekennzeichnet, dass** für den Fall, dass zumindest zwei Kennungen Funkübertragungsmodi (DECT, GSM) angeben, nach denen das Sendeempfangsmittel des Teilnehmerendgerätes (MT) Funksignale senden und empfangen kann, das drahtlose Teilnehmerendgerät denjenigen Funkübertragungsmodus (DECT) wählt, der den höchsten Verfügbarkeitswert hat.

5. Funkkommunikationssystem nach Anspruch 3,
**dadurch gekennzeichnet, dass** das drahtlose Teilnehmerendgerät (MT) an die Funkfeststation (BS1) die Kennungen für alle diejenigen Funkübertragungsmodi (DECT, GSM, UMTS) sendet, nach denen das Sendeempfangsmittel des Teilnehmerendgerätes (MT) Funksignale senden und empfangen kann, und dass dann das Steuerungsmittel (RRM) für die Funkfeststation (BS1) die Prioritätslistemittels der von dem Teilnehmerendgerät (MT) gesendeten Kennungen erstellt, wobei in der Prioritätsliste nur diese Kennungen in einer von der Höhe ihrer Verfügbarkeitswerte abhängigen Rangfolge aufgelistet sind.

6. Funkkommunikationssystem nach Anspruch 5,
**dadurch gekennzeichnet, dass** das drahtlose Teilnehmerendgerät (MT) die Kennungen für die Funkübertragungsmodi (DECT, GSM, UMTS) gemäß einer vorgebbaren Rangfolge zu einer Wunschliste auflistet und diese Wunschliste an die Funkfeststation (BS1) sendet, und dass dann das Steuerungsmittel (RRM) für die Funkfeststation (BS1) die Prioritätsliste mittels der gesendeten Wunschliste erstellt, wobei in der Prioritätsliste die Kennungen mit gleich hohem Verfügbarkeitswerten entsprechend ihrer Rangfolge innerhalb der Wunschliste aufgelistet sind.

7. Funkkommunikationssystem nach Anspruch 6,
**dadurch gekennzeichnet, dass** das drahtlose Teilnehmerendgerät (MT) Eingabemittel enthält, mittels denen der Teilnehmer die Rangfolge der in der Wunschliste aufgelisteten Funkübertragungsmodi (DECT, GSM, UMTS) vorgibt.

8. Funkkommunikationssystem nach Anspruch 6,
**dadurch gekennzeichnet, dass** das drahtlose Teilnehmerendgerät (MT) Rechenmittel enthält, die mittels des von dem Teilnehmer gewünschten Telekommunikationsdienstes die Rangfolge der in der Wunschliste aufgelisteten Funkübertragungsmodi (DECT, GSM, UMTS) vorgeben.

9. Drahtloses Teilnehmerendgerät (MT) das Sendeempfangsmittel enthält, um in einem Funkkommunikationssystem, das mindestens einer Funkfeststation (BS1, BS2) enthält, Funksignale nach mindestens zwei verschiedenen Funkübertragungsmodi (DECT, GSM, UMTS, IS95) zu senden und zu empfangen, und das ein Auswahlmittel enthält, um zumindest vor dem Aufbau einer Teilnehmerverbindung mit einer (BS1) der mindestens einen Funkfeststation (BS1, BS2) einen der verschiedenen Funkübertragungsmodi (DECT, GSM, UMTS) auszuwählen,
bei dem
das drahtlose Teilnehmerendgerät (MT) Kennungen empfängt von der mindestens einen Funkfeststation (BS1), die auch ein Sendeempfangsmittel enthält um nach verschiedenen Funkübertragungsmodi (DECT, GSM, EDGE) zu senden und zu empfangen,
**dadurch gekennzeichnet, dass**
die *Funkfeststation (BS1)* mit einem Steuerungsmittel (RRM) verbunden ist, das anhand von vorgebbaren Kriterien für jeden der verschiedenen Funkübertragungsmodi (DECT, GSM, EDGE) einen Verfügbarkeitswert bestimmt und die Funkfeststation (BS1) steuert, um an das drahtlose Teilnehmerendgerät (MT) die Kennung für die verfügbaren Funkübertragungsmodi zu senden,
*dass das Steuerungsmittel (RRM) für die*
*Funkfeststation (BS1) eine Prioritätsliste erstellt, in der die Kennungen für die Funkübertragungsmodi (DECT, GSM, EDGE) in einer von der Höhe ihrer Verfügbarkeitswerte abhängigen Rangfolge aufgelistet sind, dass die Funkfeststation (BS1) diese Prioritätsliste an das drahtlose Teilnehmerendgerät (MT) sendet, und dass das drahtlose Teilnehmerendgerät (MT) die Prioritätsliste empfängt und mittels der dort aufgelisteten Kennungen der Funkübertragungsmodi (DECT, GSM, EDGE) prüft, ob zumindest eine der Kennungen einen Funkübertragungsmodus (DECT) angibt, nach dem das Sendeempfangsmittel des Teilnehmerendgerätes (MT) Funksignale senden und empfangen kann* und dass das drahtlose Teilnehmerendgerät (MT) den in der Prioritätsliste bevorzugten und vom drahtlosen Teilnehmerendaerät (MT) unterstützten Funkübertragungsmodus auswählt.

10. Funkfeststation (BS1) für ein Funkkommunikationssystem mit mindestens einem drahtlosen Teilnehmerendgerät (MT), das ein Sendeempfangsmittel enthält, um Funksignale nach mindestens zwei verschiedenen Funkübertragungsmodi (DECT, GSM, UMTS, IS95) zu senden und zu empfangen, und das ein Auswahlmittel enthält, um zumindest vor dem Aufbau einer Teilnehmerverbindung mit der Funkfeststation (BS1) einen der verschiedenen Funkübertragungsmodi (DECT, GSM, UMTS) auszuwählen,
*bei der*
die Funkfeststation (BS1) auch ein Sendeempfangsmittel enthält, um nach verschiedenen Funkübertragungsmodi (DECT, GSM, EDGE) zu senden und zu empfangen,
***dadurch gekennzeichnet,***
**dass** die Funkfeststation (B1) mit einem Steuerungsmittel (RRM) verbunden ist, das anhand von vorgebbaren Kriterien für jeden der verschiedenen Funkübertragungsmodi (DECT, GSM, EDGE) einen Verfügbarkeitswert bestimmt, um an das drahtlose Teilnehmerendgerät (MT) die Kennung für *die verfügbaren* Funkübertragungsmodi zu senden,
***dass** das Steuerungsmittel (RRM) für die*
*Funkfeststation (BS1) eine Prioritätsliste erstellt, in der die Kennungen für die Funkübertragungsmodi (DECT, GSM, EDGE) in einer von der Höhe ihrer Verfügbarkeitswerte abhängigen Rangfolge aufgelistet sind, dass die Funkfeststation (BS1)diese Prioritätsliste an das drahtlose Teilnehmerendgerät (MT) sendet, und dass das drahtlose Teilnehmerendgerät (MT) die Prioritätsliste empfängt und mittels der dort aufgelisteten Kennungen der Funkübertragungsmodi (DECT, GSM, EDGE) prüft, ob zumindest eine der Kennungen einen Funkübertragungsmodus (DECT) angibt, nach dem das Sendeempfangsmittel des Teilnehmerendgerätes (MT) Funksignale senden und empfangen kann*
und **dass** das drahtlose Teilnehmerendgerät (MT) den in der Prioritätsliste bevorzugten und vom drahtlosen Teilnehmerendgerät (MT) unterstützten Funkübertragungsmodus auswählt.

11. Steuerungsmittel (RRM) für mindestens eine Funkfeststation (BS1, BS2) in einem Funkkommunikationssystem mit mindestens einem drahtlosen Teilnehmerendgerät (MT), das ein Sendeempfangsmittel enthält, um Funksignale nach mindestens zwei verschiedenen Funkübertragungsmodi (DECT, GSM, UMTS, IS95) zu senden und zu empfangen, und das ein Auswahlmittel enthält, um zumindest vor dem Aufbau einer Teilnehmerverbindung mit einer (BS1) der mindestens einen Funkfeststation (BS1, BS2) einen der verschiedenen Funkübertragungsmodi (DECT, GSM, UMTS) auszuwählen,
bei dem
die mindestens eine Funkfeststation (BS1) auch ein Sendeempfangsmittel enthält um nach verschiedenen Funkübertragungsmodi (DECT, GSM, EDGE) zu senden und zu empfangen,
***dadurch gekennzeichnet,***
**dass** das Steuerungsmittel (RRM) anhand von vorgebbaren Kriterien für jeden der verschiedenen Funkübertragungsmodi (DECT, GSM, EDGE) einen Verfügbarkeitswert bestimmt und die Funkfeststation (BS1) steuert, um an das drahtlose Teilnehmerendgerät (MT) *die* Kennung für die verfügbaren Funkübertragungsmodi zu senden,
**dass** das *Steuerungsmittel (RRM) für die*
*Funkfeststation (BS1) eine Prioritätsliste erstellt, in der die Kennungen für die Funkübertragungsmodi (DECT, GSM, EDGE) in einer von der Höhe ihrer Verfügbarkeitswerte abhängigen Rangfolge aufgelistet sind, dass die Funkfeststation (BS1) diese Prioritätsliste an das drahtlose Teilnehmerendgerät (MT) sendet, und dass das drahtlose Teilnehmerendgerät (MT) die Prioritätsliste empfängt und mittels der dort aufgelisteten Kennungen der Funkübertragungsmodi (DECT, GSM, EDGE) prüft, ob zumindest eine der Kennungen einen Funkübertragungsmodus (DECT) angibt, nach dem das Sendeempfangsmittel des Teilnehmerendgerätes (MT) Funksignale senden und empfangen kann*
und **dass** das drahtlose Teilnehmerendgerät (MT) den in der Prioritätsliste bevorzugten und vom drahtlosen Teilnehmerendgerät (MT) unterstützten Funkübertragungsmodus auswählt.

12. Funkübertragungsverfahren (100) in einem Funkkommunikationssystem, bei dem Funksignale von einem drahtlosen Teilnehmerendgerät (MT) nach mindestens zwei verschiedenen Funkübertragungsmodi (DECT, GSM, UMTS, IS95) gesendet und empfangen werden, und bei dem von dem Teilnehmerendgerät (MT) zumindest vor dem Aufbau (150) einer Teilnehmerverbindung zu einer Funkfeststation (BS1) einer der verschiedenen Funkübertragungsmodi (DECT, GSM, UMTS) ausgewählt wird (140),
*bei dem*
von der Funkfeststation (BS1) auch Funksignale nach verschiedenen Funkübertragungsmodi (DECT, GSM, EDGE) gesendet und empfangen werden (155),
***dadurch gekennzeichnet,***
**dass** von einem mit der Funkfeststation (BS1) verbundenen Steuerungsmittel (RRM) anhand von vorgebbaren Kriterien für jeden der verschiedenen Funkübertragungsmodi (DECT, GSM, EDGE) ein Verfügbarkeitswert bestimmt wird (110) und die Funkfeststation (BS1) gesteuert wird, um an das drahtlose Teilnehmerendgerät (MT) die Kennung für die verfügbaren Funkübertragungsmodi zu senden,
***dass** für die Funkfeststation (BS1) eine Prioritätsliste erstellt wird (120), in der die Kennungen für die Funkübertragungsmodi (DECT, GSM, EDGE) in einer von der Höhe ihrer Verfügbarkeitswerte abhängigen Rangfolge aufgelistet werden, **dass** diese Prioritätsliste von der Funkfeststation (BS1) an das drahtlose Teilnehmerendgerät (MT) gesendet wird (130), und **dass** von dem drahtlosen Teilnehmerendgerät (MT) die Prioritätsliste empfangen wird (135) und mittels der dort aufgelisteten Kennungen der Funkübertragungsmodi (DECT, GSM, EDGE) geprüft wird (140), ob zumindest eine der Kennungen einen Funkübertragungsmodus (DECT) angibt, nach dem das Sendeempfangsmittel des Teilnehmerendgerätes (MT) Funksignale senden und empfangen kann*
und **dass** das drahtlose Teilnehmerendgerät (MT) den in der Prioritätsliste bevorzugten und vom drahtlosen Teilnehmerendgerät (MT) unterstützten Funkübertragungsmodus auswählt.

13. Funkübertragungsverfahren (100') nach Anspruch 12,
**dadurch gekennzeichnet, dass** von dem drahtlosen Teilnehmerendgerät (MT) an die Funkfeststation (BS1) die Kennungen für alle diejenigen Funkübertragungsmodi (DECT, GSM, UMTS) gesendet werden (103), nach denen das Sendeempfangsmittel des Teilnehmerendgerätes (MT) Funksignale senden und empfangen kann, und **dass** dann für die Funkfeststation (BS1) die Prioritätsliste mittels der von dem Teilnehmerendgerät (MT) gesendeten Kennungen erstellt wird (120), wobei in der Prioritätsliste nur diese Kennungen in einer von der Höhe ihrer Verfügbarkeitswerte abhängigen Rangfolge aufgelistet werden.

## Claims

1. Radio communication system with at least one base transceiver station (BS1, BS2) and with at least one wireless subscriber terminal (MT) containing a transceiver for sending and receiving radio signals according to at least two different radio transmission modes (DECT, GSM, UMTS, IS95) and containing a selection means for selecting one of the different radio transmission modes (DECT, GSM, UMTS) at least before the set-up of a subscriber connection to one (BS1) of the at least one base transceiver stations (BS1, BS2),
in which the at least one base transceiver station (BS1) also contains a transceiver for sending and receiving according to different radio transmission modes (DECT, GSM, EDGE),
**characterised in that** the at least one base transceiver station (BS1) is connected to a control means (RRM) which, using presettable criteria, determines an availability value for each of the different radio transmission modes (DECT, GSM, EDGE) and controls the base transceiver station (BS1) to send the identification code for the available radio transmission modes to the wireless subscriber terminal (MT),
**in that** the control means (RRM) creates for the base transceiver station (BS1) a priority list, in which the identification codes for the radio transmission modes (DECT, GSM, EDGE) are listed in an order depending on the level of their availability values,
**in that** the base transceiver station (BS1) sends this priority list to the wireless subscriber terminal (MT) and **in that** the wireless subscriber terminal (MT) receives the priority list and on the basis of the identification codes of the radio transmission modes listed there (DECT, GSM, EDGE) checks whether at least one of the identification codes indicates a radio transmission mode (DECT) according to which the transceiver of the subscriber terminal (MT) can send and receive radio signals and **in that** the wireless subscriber terminal (MT) selects the radio transmission mode preferred in the priority list and supported by the wireless subscriber terminal (MT).

2. Radio communication system according to claim 1,
**characterised in that** the presettable criteria are the radio resources currently present in the radio system and **in that** the control means (RRM) allocates the highest availability value to the radio transmission mode (DECT) which currently has the most radio resources, by monitoring the radio resources present at each base transceiver station (BS1, BS2) connected thereto.

3. Radio communication system according to claim 1,
**characterised in that** the different radio transmission modes comprise standardised radio transmission methods (DECT, GSM, UMTS, IS95), in particular different versions of standardised radio transmission methods, and **in that** the transceiver of the at least one base transceiver station and the at least one wireless subscriber terminal (MT) can send and receive radio signals according to these standardised radio transmission methods (DECT, GSM, UMTS, IS95).

4. Radio communication system according to claim 3,
**characterised in that** in the event of at least two identification codes indicating radio transmission modes (DECT, GSM) according to which the transceiver of the subscriber terminal (MT) can send and receive radio signals, the wireless subscriber terminal chooses the radio transmission mode (DECT) which has the highest availability value.

5. Radio communication system according to claim 3,
**characterised in that** the wireless subscriber terminal (MT) sends to the base transceiver station (BS1) the identification codes for all those radio transmission codes (DECT, GSM, UMTS) according to which the transceiver of the subscriber terminal (MT) can send and receive radio signals and **in that** the control means (RRM) for the base transceiver station (BS1) creates the priority list on the basis of the identification codes sent by the subscriber terminal (MT), only these identification codes being listed in the priority list, in an order depending on the level of their availability values.

6. Radio communication system according to claim 5,
**characterised in that** the wireless subscriber terminal (MT) lists the identification codes for the radio transmission modes (DECT, GSM, UMTS) according to a presettable order into a wish list and sends this wish list to the base transceiver station (ES1) and **in that** the control means (RRM) for the base transceiver station (BS1) creates the priority list on the basis of the wish list sent, the identification codes with equally high availability values being listed in the priority list according to their order within the wish list.

7. Radio communication system according to claim 6,
**characterised in that** the wireless subscriber terminal (MT) contains input means by means of which the subscriber presets the order of the radio transmission modes (DECT, GSM, UMTS) listed in the wish list.

8. Radio communication system according to claim 6,
**characterised in that** the wireless subscriber terminal (MT) contains computing means which preset the order of the radio transmission modes (DECT, GSM, UMTS) listed in the wish list on the basis of the telecommunications service desired by the subscriber.

9. Wireless subscriber terminal (MT) containing transceivers for sending and receiving radio signals in a radio communication system containing at least one base transceiver station (BS1, BS2), according to at least two different radio transmission modes (DECT, GSM, UMTS, IS95) and containing a selection means for selecting one of the various radio transmission modes (DECT, GSM, UMTS) at least before the set-up of a subscriber connection to one (BS1) of the at least one base transceiver stations (BS1, BS2),
in which the wireless subscriber terminal (MT) receives identification codes from the at least one base transceiver station (BS1), which also contains a transceiver for sending and receiving according to different radio transmission modes (DECT, GSM, EDGE),
**characterised in that**
the base transceiver station (BS1) is connected to a control means (RRM) which, using presettable criteria, determines an availability value for each of the different radio transmission modes (DECT, GSM, EDGE) and controls the base transceiver station (BS1) to send the identification code for the available radio transmission modes to the wireless subscriber terminal (MT),
**in that** the control means (RRM) creates for the base transceiver station (BS1) a priority list, in which the identification codes for the radio transmission modes (DECT, GSM, EDGE) are listed in an order depending on the level of their availability values,
**in that** the base transceiver station (BS1) sends this priority list to the wireless subscriber terminal (MT) and **in that** the wireless subscriber terminal (MT) receives the priority list and on the basis of the identification codes of the radio transmission modes listed there (DECT, GSM, EDGE) checks whether at least one of the identification codes indicates a radio transmission mode (DECT) according to which the transceiver of the subscriber terminal (MT) can send and receive radio signals and **in that** the wireless subscriber terminal (MT) selects the radio transmission mode preferred in the priority list and supported by the wireless subscriber terminal (MT).

10. Base transceiver station (BS1) for a radio communication system with at least one wireless subscriber terminal (MT) containing a transceiver for sending and receiving radio signals according to at least two different radio transmission modes (DECT, GSM, UMTS, IS95) and containing a selection means for selecting one of the various radio transmission modes (DECT, GSM, UMTS) at least before the set-up of a subscriber connection to the base transceiver station (BS1),
in which the base transceiver station (BS1) also contains a transceiver for sending and receiving according to different radio transmission modes (DECT, GSM, EDGE),
**characterised in that** the base transceiver station (BS1) is connected to a control means (RRM) which, using presettable criteria, determines an availability value for each of the different radio transmission modes (DECT, GSM, EDGE) for sending the identification code for the available radio transmission modes to the wireless subscriber terminal (MT),
**in that** the control means (RRM) creates for the base transceiver station (BS1) a priority list, in which the identification codes for the radio transmission modes (DECT, GSM, EDGE) are listed in an order depending on the level of their availability values,
**in that** the base transceiver station (BS1) sends this priority list to the wireless subscriber terminal (MT) and **in that** the wireless subscriber terminal (MT) receives the priority list and on the basis of the identification codes of the radio transmission modes listed there (DECT, GSM, EDGE) checks whether at least one of the identification codes indicates a radio transmission mode (DECT) according to which the transceiver of the subscriber terminal (MT) can send and receive radio signals and **in that** the wireless subscriber terminal (MT) selects the radio transmission mode preferred in the priority list and supported by the wireless subscriber terminal (MT).

11. Control means (RRM) for at least one base transceiver station (BS1, BS2) in a radio communication system with at least one wireless subscriber terminal (MT) containing a transceiver for sending and receiving radio signals according to at least two different radio transmission modes (DECT, GSM, UMTS, IS95) and containing a selection means for selecting one of the different radio transmission modes (DECT, GSM, UMTS) at least before the set-up of a subscriber connection to one (BS1) of the at least one base transceiver stations (BS1, BS2),
in which the at least one base transceiver station (BS1) also contains a transceiver for transmitting and receiving according to different radio transmission modes (DECT, GSM, EDGE),
**characterised in that**, using presettable criteria, the control means (RRM) determines an availability value for each of the different radio transmission modes (DECT, GSM, EDGE) and controls the base transceiver station (BS1) to send the identification code for the available radio transmission modes to the wireless subscriber terminal (MT),
**in that** the control means (RRM) creates for the base transceiver station (BS1) a priority list, in which the identification codes for the radio transmission modes (DECT, GSM, EDGE) are listed in an order depending on the level of their availability values,
**in that** the base transceiver station (BS1) sends this priority list to the wireless subscriber terminal (MT) and **in that** the wireless subscriber terminal (MT) receives the priority list and on the basis of the identification codes of the radio transmission modes listed there (DECT, GSM, EDGE) checks whether at least one of the identification codes indicates a radio transmission mode (DECT) according to which the transceiver of the subscriber terminal (MT) can send and receive radio signals and **in that** the wireless subscriber terminal (MT) selects the radio transmission mode preferred in the priority list and supported by the wireless subscriber terminal (MT).

12. Radio transmission method (100) in a radio communication system, in which radio signals are sent and received by a wireless subscriber terminal (MT) according to at least two different radio transmission modes (DECT, GSM, UMTS, IS95) and in which one of the different radio transmission modes (DECT, GSM, UMTS) is selected (140) by the subscriber terminal (MT) at least before the set-up (150) of a subscriber connection to a base transceiver station (BS1),
in which radio signals are also sent and received (155) by the base transceiver station (BS1) according to different radio transmission modes (DECT, GSM, EDGE),
**characterised in that**,
using presettable criteria, an availability value is determined (110) by a control means (RRM) connected to the base transceiver station (BS1) for each of the different radio transmission modes (DECT, GSM, EDGE) and the base transceiver station (BS1) is controlled to send the identification code for the available radio transmission modes to the wireless subscriber terminal (MT),
**in that** a priority list is created (120) for the base transceiver station (BS1), in which the identification codes for the radio transmission modes (DECT, GSM, EDGE) are listed in an order depending on the level of their availability values, **in that** this priority list is sent (130) by the base transceiver station (BS1) to the wireless subscriber terminal (MT) and **in that** the priority list is received (135) by the wireless subscriber terminal (MT) and on the basis of the identification codes of the radio transmission modes listed there (DECT, GSM, EDGE) it is checked (140) whether at least one of the identification codes indicates a radio transmission mode (DECT) according to which the transceiver of the subscriber terminal (MT) can send and receive radio signals
and **in that** the wireless subscriber terminal (MT) selects the radio transmission mode preferred in the priority list and supported by the wireless subscriber terminal (MT).

13. Radio transmission method (100') according to claim 12,
**characterised in that** the identification codes for all those radio transmission modes (DECT, GSM, UMTS) according to which the transceiver of the subscriber terminal (MT) can send and receive radio signals are sent (130) to the base transceiver station (BS1) by the wireless subscriber terminal (MT) and **in that** the priority list is then created (120) for the base transceiver station (BS1) on the basis of the identification codes sent by the subscriber terminal (MT), only these identification codes being listed in the priority list, in an order depending on the level of their availability values.

## Revendications

1. Système de radiocommunication comprenant au moins une station de radiocommunication fixe (BS1, BS2) et comprenant au moins un terminal d'abonné sans fil (MT) qui contient un moyen d'émission/réception pour émettre et recevoir des signaux radioélectriques selon au moins deux modes de transmission radioélectrique différents (DECT, GSM, UMTS, IS95), et qui contient un moyen de sélection pour sélectionner l'un des différents modes de transmission radioélectrique (DECT, GSM, UMTS) au moins avant l'établissement d'une liaison d'abonné avec l'une (BS1) de l'au moins une station de radiocommunication fixe (BS1, BS2),
avec lequel
l'au moins une station de radiocommunication fixe (BS1) contient également un moyen d'émission/réception afin d'émettre et de recevoir selon différents modes de transmission radioélectrique (DECT, GSM, EDGE),
***caractérisé en ce que***
l'au moins une station de radiocommunication fixe (BS1) est reliée avec un moyen de commande (RRM) qui détermine au moyen de critères pouvant être prédéfinis un indice de disponibilité pour chacun des différents modes de transmission radioélectrique (DECT, GSM, EDGE) et commande la station de radiocommunication fixe (BS1) afin d'envoyer au terminal d'abonné sans fil (MT) l'identifiant pour les modes de transmission radioélectrique disponibles
que le moyen de commande (RRM) pour la station de radiocommunication fixe (BS1) établit une liste des priorités dans laquelle sont énumérés les identifiants des modes de transmission radioélectrique (DECT, GSM, EDGE) dans un ordre qui dépend de la valeur de leurs indices de disponibilité, que la station de radiocommunication fixe (BS1) envoie cette liste des priorités au terminal d'abonné sans fil (MT) et que le terminal d'abonné sans fil (MT) reçoit la liste des priorités et vérifie, au moyen des identifiants des modes de transmission radioélectrique (DECT, GSM, EDGE) qui y sont énumérés, si au moins l'un des identifiants indique un mode de transmission radioélectrique (DECT) selon lequel le moyen d'émission/réception du terminal d'abonné (MT) peut émettre et recevoir des signaux radioélectriques et que le terminal d'abonné sans fil (MT) sélectionne dans la liste des priorités le mode de transmission radioélectrique préférentiel et pris en charge par le terminal d'abonné sans fil (MT).

2. Système de radiocommunication selon la revendication 1, **caractérisé en ce que** les critères pouvant être prédéfinis sont les ressources radioélectriques momentanément présentes dans le système de radiocommunication et que le moyen de commande (RRM), en surveillant les ressources radioélectriques de chacune des stations de radiocommunication fixes (BS1, BS2) reliées avec lui, affecte l'indice de disponibilité le plus élevé au mode de transmission radioélectrique (DECT) qui présente actuellement le plus grand nombre de ressources radioélectriques.

3. Système de radiocommunication selon la revendication 1, **caractérisé en ce que** les différents modes de transmission radioélectrique comprennent des procédés de transmission radioélectrique normalisés (DECT, GSM, UMTS, IS95), notamment différentes versions de procédés de transmission radioélectrique normalisés, et que les moyens d'émission/réception de l'au moins une station de radiocommunication fixe et de l'au moins un terminal d'abonné sans fil (MT) peuvent émettre et recevoir des signaux radioélectriques selon ces procédés de transmission radioélectrique normalisés (DECT, GSM, UMTS, IS95).

4. Système de radiocommunication selon la revendication 3, **caractérisé en ce que** dans le cas où au moins deux identifiants indiquent des modes de transmission radioélectrique (DECT, GSM) selon lesquels le moyen d'émission/réception du terminal d'abonné (MT) peut émettre et recevoir des signaux radioélectriques, le terminal d'abonné sans fil sélectionne le mode de transmission radioélectrique (DECT) qui possède l'indice de disponibilité le plus élevé.

5. Système de radiocommunication selon la revendication 3, **caractérisé en ce que** le terminal d'abonné sans fil (MT) envoie à la station de radiocommunication fixe (BS1) les identifiants de tous les modes de transmission radioélectrique (DECT, GSM, UMTS) selon lesquels le moyen d'émission/réception du terminal d'abonné (MT) peut émettre et recevoir des signaux radioélectriques et que le moyen de commande (RRM) pour la station de radiocommunication fixe (BS1) établit la liste des priorités au moyen des identifiants envoyés par le terminal d'abonné (MT), seuls ces identifiants étant énumérés dans la liste des priorités dans un ordre dépendant de la valeur de leurs indices de disponibilité.

6. Système de radiocommunication selon la revendication 5, **caractérisé en ce que** le terminal d'abonné sans fil (MT) regroupe les identifiants des modes de transmission radioélectrique (DECT, GSM, UMTS) en une liste de souhaits selon un ordre pouvant être prédéfini et envoie cette liste de souhaits à la station de radiocommunication fixe (BS1) et que le moyen de commande (RRM) pour la station de radiocommunication fixe (BS1) établit la liste des priorités au moyen de la liste de souhaits envoyée, la liste des priorités énumérant les identifiants ayant les mêmes valeurs d'indice de disponibilité en fonction de l'ordre souhaité au sein de la liste de souhaits.

7. Système de radiocommunication selon la revendication 6, **caractérisé en ce que** le terminal d'abonné sans fil (MT) comprend des moyens d'entrée à l'aide desquels l'abonné prédéfinit l'ordre des modes de transmission radioélectrique (DECT, GSM, UMTS) énumérés dans liste de souhaits.

8. Système de radiocommunication selon la revendication 6, **caractérisé en ce que** le terminal d'abonné sans fil (MT) comprend des moyens de calcul qui prédéfinissent l'ordre des modes de transmission radioélectrique (DECT, GSM, UMTS) énumérés dans liste de souhaits à l'aide du service de radiocommunication souhaité par l'abonné.

9. Terminal d'abonné sans fil (MT) qui contient un moyen d'émission/réception pour émettre et recevoir, dans un système de radiocommunication qui comprend au moins une station de radiocommunication fixe (BS1, BS2), des signaux radioélectriques selon au moins deux modes de transmission radioélectrique différents (DECT, GSM, UMTS, IS95), et qui contient un moyen de sélection pour sélectionner l'un des différents modes de transmission radioélectrique (DECT, GSM, UMTS) au moins avant l'établissement d'une liaison d'abonné avec l'une (BS1) de l'au moins une station de radiocommunication fixe (BS1, BS2),
avec lequel
le terminal d'abonné sans fil (MT) reçoit des identifiants de l'au moins une station de radiocommunication fixe (BS1), laquelle contient également un moyen d'émission/réception pour émettre et recevoir selon différents modes de transmission radioélectrique différents (DECT, GSM, EDGE),
**caractérisé en ce que**
la station de radiocommunication fixe (BS1) est reliée avec un moyen de commande (RRM) qui détermine au moyen de critères pouvant être prédéfinis un indice de disponibilité pour chacun des différents modes de transmission radioélectrique (DECT, GSM, EDGE) et commande la station de radiocommunication fixe (BS1) afin d'envoyer au terminal d'abonné sans fil (MT) l'identifiant pour les modes de transmission radioélectrique disponibles
que le moyen de commande (RRM) pour la station de radiocommunication fixe (BS1) établit une liste des priorités dans laquelle sont énumérés les identifiants des modes de transmission radioélectrique (DECT, GSM, EDGE) dans un ordre qui dépend de la valeur de leurs indices de disponibilité, que la station de radiocommunication fixe (BS1) envoie cette liste des priorités au terminal d'abonné sans fil (MT) et que le terminal d'abonné sans fil (MT) reçoit la liste des priorités et vérifie, au moyen des identifiants des modes de transmission radioélectrique (DECT, GSM, EDGE) qui y sont énumérés, si au moins l'un des identifiants indique un mode de transmission radioélectrique (DECT) selon lequel le moyen d'émission/réception du terminal d'abonné (MT) peut émettre et recevoir des signaux radioélectriques et que le terminal d'abonné sans fil (MT) sélectionne dans la liste des priorités le mode de transmission radioélectrique préférentiel et pris en charge par le terminal d'abonné sans fil (MT).

10. Station de radiocommunication fixe (BS1) pour un système de radiocommunication comprenant au moins un terminal d'abonné sans fil (MT) qui contient un moyen d'émission/réception pour émettre et recevoir des signaux radioélectriques selon au moins deux modes de transmission radioélectrique différents (DECT, GSM, UMTS, IS95), et qui contient un moyen de sélection pour sélectionner l'un des différents modes de transmission radioélectrique (DECT, GSM, UMTS) au moins avant l'établissement d'une liaison d'abonné avec l'une (BS1), avec laquelle
la station de radiocommunication fixe (BS1) contient également un moyen d'émission/réception afin d'émettre et de recevoir selon différents modes de transmission radioélectrique (DECT, GSM, EDGE),
**caractérisée en ce que**
la station de radiocommunication fixe (BS1) est reliée avec un moyen de commande (RRM) qui détermine au moyen de critères pouvant être prédéfinis un indice de disponibilité pour chacun des différents modes de transmission radioélectrique (DECT, GSM, EDGE) afin d'envoyer au terminal d'abonné sans fil (MT) l'identifiant pour les modes de transmission radioélectrique disponibles,
que le moyen de commande (RRM) pour la station de radiocommunication fixe (BS1) établit une liste des priorités dans laquelle sont énumérés les identifiants des modes de transmission radioélectrique (DECT, GSM, EDGE) dans un ordre qui dépend de la valeur de leurs indices de disponibilité, que la station de radiocommunication fixe (BS1) envoie cette liste des priorités au terminal d'abonné sans fil (MT) et que le terminal d'abonné sans fil (MT) reçoit la liste des priorités et vérifie, au moyen des identifiants des modes de transmission radioélectrique (DECT, GSM, EDGE) qui y sont énumérés, si au moins l'un des identifiants indique un mode de transmission radioélectrique (DECT) selon lequel le moyen d'émission/réception du terminal d'abonné (MT) peut émettre et recevoir des signaux radioélectriques et que le terminal d'abonné sans fil (MT) sélectionne dans la liste des priorités le mode de transmission radioélectrique préférentiel et pris en charge par le terminal d'abonné sans fil (MT).

11. Moyen de commande (RRM) pour au moins une station de radiocommunication fixe (BS1, BS2) dans un système de radiocommunication comprenant au moins un terminal d'abonné sans fil (MT) qui contient un moyen d'émission/réception pour émettre et recevoir des signaux radioélectriques selon au moins deux modes de transmission radioélectrique différents (DECT, GSM, UMTS, IS95), et qui contient un moyen de sélection pour sélectionner l'un des différents modes de transmission radioélectrique (DECT, GSM, UMTS) au moins avant l'établissement d'une liaison d'abonné avec l'une (BS1) de l'au moins une station de radiocommunication fixe (BS1, BS2), avec lequel
l'au moins une station de radiocommunication fixe (BS1) contient également un moyen d'émission/réception afin d'émettre et de recevoir selon différents modes de transmission radioélectrique (DECT, GSM, EDGE),
**caractérisé en ce que**
le moyen de commande (RRM) détermine au moyen de critères pouvant être prédéfinis un indice de disponibilité pour chacun des différents modes de transmission radioélectrique (DECT, GSM, EDGE) et commande la station de radiocommunication fixe (BS1) afin d'envoyer au terminal d'abonné sans fil (MT) l'identifiant pour les modes de transmission radioélectrique disponibles
que le moyen de commande (RRM) pour la station de radiocommunication fixe (BS1) établit une liste des priorités dans laquelle sont énumérés les identifiants des modes de transmission radioélectrique (DECT, GSM, EDGE) dans un ordre qui dépend de la valeur de leurs indices de disponibilité, que la station de radiocommunication fixe (BS1) envoie cette liste des priorités au terminal d'abonné sans fil (MT) et que le terminal d'abonné sans fil (MT) reçoit la liste des priorités et vérifie, au moyen des identifiants des modes de transmission radioélectrique (DECT, GSM, EDGE) qui y sont énumérés, si au moins l'un des identifiants indique un mode de transmission radioélectrique (DECT) selon lequel le moyen d'émission/réception du terminal d'abonné (MT) peut émettre et recevoir des signaux radioélectriques et que le terminal d'abonné sans fil (MT) sélectionne dans la liste des priorités le mode de transmission radioélectrique préférentiel et pris en charge par le terminal d'abonné sans fil (MT).

12. Procédé de transmission radioélectrique (100) dans un système de radiocommunication, avec lequel des signaux radioélectriques sont émis et reçus par un terminal d'abonné sans fil (MT) selon au moins deux modes de transmission radioélectrique différents (DECT, GSM, UMTS, IS95), et avec lequel le terminal d'abonné sans fil (MT) sélectionne (140) l'un des différents modes de transmission radioélectrique (DECT, GSM, UMTS) au moins avant l'établissement (150) d'une liaison d'abonné avec une station de radiocommunication fixe (BS1),
avec lequel
la station de radiocommunication fixe (BS1) émet et reçoit (155) également des signaux radioélectriques selon différents modes de transmission radioélectrique (DECT, GSM, EDGE),
**caractérisé en ce que**
un moyen de commande (RRM) relié avec la station de radiocommunication fixe (BS1) détermine (110) au moyen de critères pouvant être prédéfinis un indice de disponibilité pour chacun des différents modes de transmission radioélectrique (DECT, GSM, EDGE) et commande la station de radiocommunication fixe (BS1) afin d'envoyer au terminal d'abonné sans fil (MT) l'identifiant pour les modes de transmission radioélectrique disponibles
qu'une liste des priorités est établie (120) pour la station de radiocommunication fixe (BS1) dans laquelle sont énumérés les identifiants des modes de transmission radioélectrique (DECT, GSM, EDGE) dans un ordre qui dépend de la valeur de leurs indices de disponibilité, que cette liste des priorités est envoyée (130) au terminal d'abonné sans fil (MT) par la station de radiocommunication fixe (BS1) et que le terminal d'abonné sans fil (MT) reçoit (135) la liste des priorités et vérifie (140), au moyen des identifiants des modes de transmission radioélectrique (DECT, GSM, EDGE) qui y sont énumérés, si au moins l'un des identifiants indique un mode de transmission radioélectrique (DECT) selon lequel le moyen d'émission/réception du terminal d'abonné (MT) peut émettre et recevoir des signaux radioélectriques et que le terminal d'abonné sans fil (MT) sélectionne dans la liste des priorités le mode de transmission radioélectrique préférentiel et pris en charge par le terminal d'abonné sans fil (MT).

13. Procédé de transmission radioélectrique (100') selon la revendication 12, **caractérisé en ce que** le terminal d'abonné sans fil (MT) envoie (103) à la station de radiocommunication fixe (BS1) les identifiants pour tous les modes de transmission radioélectrique (DECT, GSM, UMTS) selon lesquels le moyen d'émission/réception du terminal d'abonné (MT) peut émettre et recevoir des signaux radioélectriques et que la liste des priorités est ensuite établie (120) pour la station de radiocommunication fixe (BS1) au moyen des identifiants envoyés par le terminal d'abonné (MT), la liste des priorités ne contenant que les identifiants dans un ordre qui dépend de la valeur de leurs indices de disponibilité.
